Europäisches Patentamt

European Patent Office

Office européen des brevets

(19)

(11) **EP 1 255 359 A1**

(12) **EUROPEAN PATENT APPLICATION**

(43) Date of publication:
**06.11.2002 Bulletin 2002/45**

(51) Int Cl.7: **H04B 1/12**, H04L 27/26,
H04B 3/32

(21) Application number: **01110836.2**

(22) Date of filing: **04.05.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(71) Applicant: **STMicroelectronics N.V.<br>1077 XX Amsterdam (NL)**<br><br>(72) Inventors:<br> • **Börjesson, Per Ola<br>   22352 Lund (SE)** | • **Lundberg, Torvald<br>   94533 Rosvik (SE)**<br>• **Ödling, Per<br>   89196 Arnäsvall (SE)**<br><br>(74) Representative: **Akerman, Marten Lennart et al<br>Albihns Malmö AB<br>Box 4289<br>203 14 Malmö (SE)** |

(54) **Method and apparatus for cancelling radio frequency interference**

(57)     A method and an apparatus for cancelling radio frequency interference in the analogue domain, in twisted pair connections when used for digital subscriber lines (DSL). When a disturbance signal couples onto the wire pair line as a common mode disturbance (c), the common mode disturbance is partially converted into a differential mode disturbance (r), and said differential mode disturbance interferes additively with said communication signal, resulting in a differential mode signal (d). The apparatus comprises means for sensing the common mode disturbance, means for converting the common mode disturbance into a reference signal (u), a modulator for applying a weight parameter (w) to the reference signal, and means for subtracting a differential mode cancellation signal, comprising the weighted reference signal, from the differential mode signal in order to obtain a minimised residual signal (ξ). Preferably the apparatus comprises a demodulator devised to sense the residual signal and create an adaptation vector (q) for adapting the weight parameter in order to minimise said residual signal.

Fig. 3

**Description**

Field of the invention

The present invention relates to a method and an apparatus for cancelling radio frequency interference in twisted pair connections when used for digital subscriber lines (DSL). More specifically, the invention provides a solution for mitigating the interference in the analogue domain, devised to overcome the problem of saturation of analogue-to-digital converters in a DSL modem.

Background

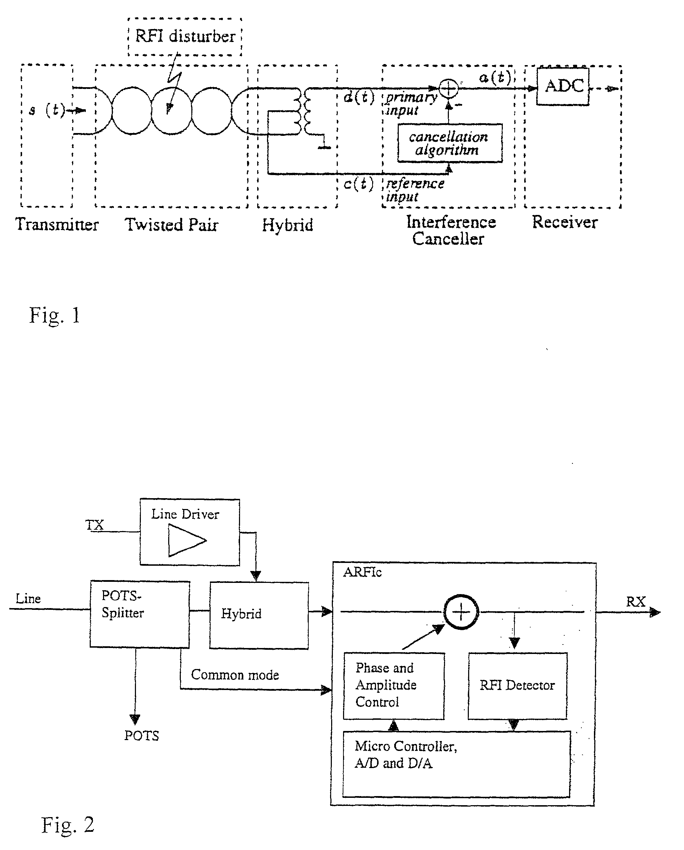

Emerging high-speed data transmission systems intended for use in the access part of the public telephony network, such as the digital subscriber line (DSL) family, use a much larger bandwidth than the twisted copper pairs were originally intended for. This introduces impairments that researchers and engineers have not been faced with in voice-band modem technology. Among these, radio-frequency interference (RFI) caused by broadcast AM radio transmitters and radio amateurs is considered to be one of the most challenging problems. Especially the interference from radio amateurs (HAM interference) is difficult to handle. It is non-stationary, as the transmission is intermittent and bursty, and exhibits potentially high power levels when transmitters are close to the wiring, as reported by L. De Clercq, et al. In "Mitigation of Radio Interference i xDSL Transmission", IEEE Communications Magazine, Mar. 2000. The effect of HAM interference could be compared to having somebody shouting in your ear while trying to listen to a polite conversation. Fig. 1 illustrated the system setup.

The aim of a DSL system is to transmit a signal $s(t)$ over a twisted copper pair. The wire pair acts like an antenna and picks up radio signals, especially when installed as an overhead line. This is often the case for the last meters of wire to the subscriber, which unfortunately is also where the HAM transmitter most often is located. Basically the disturbance couples onto the line as a common mode signal. This common mode interference signal can be very strong if the transmitter is close to the wire. Since wires in the filed are never perfectly balanced, the common mode disturbance is partially converted into a differential mode component which interferes additively with the signal we would like to receive. This results in a strong differential mode disturbance, but the common mode signal also provides an almost perfect reference.

Let $c(t)$ be the common mode component of the narrowband disturber at the receiver. The resulting differential mode signal $d(t)$ at the receiver input can be written as the sum of the received signal $s(t)$ and the differential disturber component $r(t)$, i.e.

$$d(t) = s(t) + r(t) + a_{c2d}c(t + \tau_{lag})$$

where $a_{c2d}$ denotes the coupling factor and $\tau_{lag}$ takes into account a small shift in time. A speed difference between common mode and differential mode signals at 1 MHz of 0,31 times the speed of light is reported by T. Yeap in "A Digital Common-Mode Noise Canceller for Twisted-pair Cable", ANSI Contribution T1E1.4/99-260,1999. However, multiple coupling between the two modes and the fact that a considerably long part of the wire may be hit by the disturber, complicate the scenario. RFI ingress measurements on a dropwire indicate a lag between -1µs and +1µs in the frequency range up to 30 MHz, as reported by M. Sehlstedt in "RFI Cancellation in VDSL", Master Thesis, LTU-EX-00327-SE, Luleå University of Technology, 2000. Depending on the type of wire, the common-mode to differential-mode coupling $a_{c2d}$ can be as strong as -35 dB. The common mode disturbance can be in the order of 30 $V_{peak}$ at the receiver, which may result in differential mode disturber levels up to 0,5 $V_{peak}$, as reported by K. T. Foster et al. In "The Radio Frequency Interference (RFI) Environment for Very High-Rate Transmission over Metallic Access Wire-Pairs", ANSI Contribution T1E1.4/95-020, 1995, and by K. T. Foster in "Practical Measurements of the Level of Induced RFI from Amateur Radio Transmissions on Various Lengths of Three Types of Dropwiring Commonly Found in BT's Access Network", ANSI Contribution T1E1.4/95-097, 1995. The level of the desired signal at the receiver's input, also referred to as the far-end signal, for a medium length wire of 1,5 km, is typically in the range of 60 - 80 $mV_{peak}$. The receiver's ADC turned to sample only the desired far-end signal, will then saturate, and the desired signal is lost.

A considerable amount of work has been done to mitigate the RFI problem in the digital domain, i.e. after the analogue-to-digital converter (ADC). One report was made by T. Yeap in "A Digital Common-Mode Noise Canceller for Twisted-pair Cable", ANSI Contribution T1E1.4/99-260,1999. Another report was made by F. Sjöberg et al. In "Digital RFI Suppression in DMT-based VDSL Systems", in Proc. ICT98, 1998, vol. 2, pp. 189-193. Yet another report was made by D. I. Pazaitis et al. In "Equalisation and Radio Frequency Interference Cancellation in Broadband Twisted Pair Receivers", in Proc. GLOBECOM98, 1998, vol. 6, pp. 3503-3508. Another presentation was made by D. Harman et al. In "Steady-state Performance and Blind Training of a DFE in the Presence of RF Interference", ANSI Contribution T1E1.4/97-104,1997. However, none of these approaches work in case the ADC is saturated.

Hence, the main objective for the present invention is to reduce the RFI signal prior to A/D conversion to the extent that the A/D converters of a receiver modem are not saturated. This is to be done as fast as possible to minimize the RFI's impact on the system. If possible, it is also beneficial if the RFI can be reduced so much that digital RFI cancellation is not necessary.

Summary of the invention

The present invention suggests a novel RFI canceller structure, essentially solving the ADC overload problem. According to a first aspect, the present invention therefore relates to a method for cancelling analogue radio frequency interference with a communication signal transmitted on a wire pair line, wherein a disturbance signal couples onto the wire pair line as a common mode disturbance. The common mode disturbance is partially converted into a differential mode disturbance, and said differential mode disturbance interferes additively with said communication signal, resulting in a differential mode signal: The method is characterised in that the common mode disturbance is sensed and converted into a reference signal; a weight parameter is applied to the reference signal; and a minimised residual signal is obtained by subtracting the weighted reference signal from the differential mode signal.

Preferably the residual signal is sensed and used to adapt the weight parameter in order to minimise said residual signal.

In one embodiment said reference signal comprises two reference subsignals of equal amplitude but with a 90° phase shift. The inventive method is such case preferably characterised in that said weight parameter comprises two weight subparameters; a first weight subparameter is applied to a first reference subsignal; a second weight subparameter is applied to a second reference subsignal; and the weighted reference subsignals are added to form a differential mode cancellation signal of selectable amplitude and phase.

In one embodiment said residual signal is applied to said reference subsignals to create an adaptation vector.

In one embodiment said weight parameter is updated by means of an adaptive algorithm, dependent on the current weight parameter and said adaptation vector.

According to a second aspect, the present invention therefore relates to an apparatus for cancelling analogue radio frequency interference with a communication signal transmitted on a wire pair line, wherein a disturbance signal couples onto the wire pair line as a common mode disturbance. Said common mode disturbance is partially converted into a differential mode disturbance, and said differential mode disturbance interferes additively with said communication signal, resulting in a differential mode signal. The apparatus is characterised in comprising means for sensing the common mode disturbance, means for converting the common mode disturbance into a reference signal, a modulator for applying a weight parameter to the reference signal, and means for subtracting a differential mode cancellation signal, comprising the weighted reference signal, from the differential mode signal in order to obtain a minimised residual signal.

Preferably the apparatus comprises a demodulator devised to sense the residual signal and create an adaptation vector for adapting the weight parameter in order to minimise said residual signal.

In one embodiment the apparatus comprises a controller having data memory means and data processing means for running a computer program devised to execute an adaptive algorithm on said weight parameter, dependent on said adaptation vector, for minimising said residual signal, said controller having an output for an adapted weight parameter.

In one embodiment said means for converting comprises a 90° phase splitter loop, devised to create two reference subsignals of equal amplitude but with a 90° phase difference.

In one embodiment said weight parameter comprises two weight subparameters, and said modulator is a quadrature modulator having an input for said subparameters, an input for said subsignals, means for applying a first weight subparameter to a first reference subsignal and a second weight subparameter to a second reference subsignal, means for adding the weighted reference subsignals to form a differential mode cancellation signal of selectable amplitude and phase, and an output for said cancellation signal.

In one embodiment said controller is devised to give the differential mode cancellation signal an amplitude equal to the differential mode signal but with opposite phase, said means for subtracting being a summing amplifier devised to sum the differential mode cancellation signal and the differential mode signal.

In one embodiment said demodulator is a quadrature demodulator having an input for said residual signal, an input for said subsignals, means for applying the residual signal to the first and second reference subsignals, filtering means having an input connected to an output of said means for applying, and a demodulator output connected to said filtering means, for outputting the adaptation vector. In such case said controller has an input connected to said demodulator output.

In one embodiment the apparatus further comprises power detecting means for detecting the signal power of the common mode disturbance, said power detecting means being coupled to an input of said controller. In such case said adaptive algorithm is preferably also dependent on a signal power value from the input from said power detecting means.

In one embodiment the apparatus is arranged on the receiving end (RX) of a digital subscriber line (DSL) modem, prior to the signal analogue-to-digital converter of the modem.

Brief Description of the drawings

Different embodiments of the present invention are described below, with references to the accompanying drawings. These drawings merely show examples of how the invention may be realised, and should not be interpreted as limiting. In the drawings:

Fig. 1 schematically illustrates the system setup from transmitter to receiver in a twisted pair transmission system, and comprising an embodiment of the present invention;
Fig. 2 schematically illustrates the placement of the RFI cancelling apparatus in a modem, according to an embodiment of the invention;
Fig. 3 schematically shows a block diagram of one embodiment of the RFI cancelling apparatus according to the present invention;
Fig. 4 schematically illustrates an embodiment of the 90 degree splitter loop according to the present invention.

Detailed description of preferred embodiments

The present invention relates to an analogue radio frequency interference canceller ARFIc intended for e.g. the Zipper-VDSL modem. The purpose of the ARFIc is to reduce the level of an RFT-signal so much that saturation of the A/D converters is avoided. The faster and the stronger the suppression is, the better. Fig. 1 Shows the principle of the RFI canceller according to the present invention, and the system setup for its usage, in a very basic illustration. The desired data in signal $s(t)$ is carried in the differential mode signal $d(t)$, as will be explained in more detail later. The receiver could e.g. be a modem.

Fig. 2 shows the placement of the cancelling apparatus according to an embodiment of the invention, in a modem having a receiving end RX and a transmitting end TX. As evidenced by the drawing, the apparatus is preferably placed before the RX of the modem, thus being devised to cancel the RFI in the analogue mode before reception into the modem. Hence the canceller prevents the RFI from saturating any active circuits, such as A/D converters, in the modem.

An important part of understanding the RFI problem and its countermeasures, lies in understanding the nature of the RFI-signal itself. To be able to combat RFI disturbers, the present invention makes use of a combination of high-frequency analogue and low-frequency digital signal processing. It may at first seem contradictory that a canceller can use analogue-to-digital and digital-to-analogue converters clocked at some kHz when the signal to be cancelled is at several MHz. However, although the carrier frequencies are high, the bandwidth of the signals themselves is only a few kHz. Usually disturbers have a bandwidth between two and three kHz. What is important is to track with the canceller are changes in the coupling from the common mode signal to the differential mode signal, i.e. $a_{c2d}$ and $\tau_{lag}$ in the previous equation. They are both frequency dependent. However, their change is virtually zero within the few kHz of bandwidth of a HAM-disturber. Neither does the disturber traverse along the line at any speeds that would cause rapid changes in the coupling. Thus, we can assume that $a_{c2d}$ and $\tau_{lag}$ are constant.

The fact that the disturbing signal is of special nature, i.e. of small bandwidth, is exploited in the way of designing a canceller according to the present invention, which was also early suggested by B. Widrow in "Adaptive Noise Cancelling: Principles and Applications", in Poc. IEEE, 1975, vol. 63, pp 1692-1716. The differential mode interference $r(t)$ is virtually the same as the reference signal $c(t)$, except that it is scaled by $\alpha_{c2d}$ and shifted in time by $\tau_{lag}$, as given in said equation.

The cancellation process is divided into two parts: to detect the RFI and to cancel it. The RFI detection has to be fast and accurate to achieve fast cancellation of the RFI. The better the RFI detection, the better the cancellation. There are several ways to detect the RFI signals. Bandpass filters together with level detectors, and Coherent detection are two examples. There are also several ways to cancel the RFI, such as: Using a band reject filter (notch filter) in the receiver before the first amplifier; Subtracting the common mode RFI signal from the differential mode signal by RFI differential mode power level measurement and amplitude and phase control of the cancellation RFI signal; The same but with a quadrature demodulator residual RFI measurement and a quadrature modulator to steer the cancellation RFI vector from the common mode RFI tap. The last method will be described later in the text. The cancellation has to be fast in the beginning to avoid overloading of the A/D converter and the amplifier preceding the A/D converter.

To make it possible to cancel the RFI it first has to be detected. The detection has to be done in the RX part of the modem, that is at the receiving end before actually entering the modem. There are at least two methods to detect the RFI: detecting the RFI amplitude with bandpass filters and a level detector, or detecting the RFI with a coherent quadrature detector.

When detecting the RFI level with bandpass filters, one can measure the signal level in some portions of the frequency bands by using bandpass filters with steep skirts. The bandpass filters have to be aligned to the frequency bands where the RFI is expected to appear, i.e., the HAM bands. The level detector can be made with a diode and a lowpass filter. The lowpass filter has to have enough integration time so it does not just reflect the peaks of the VDSL signal. This long integration time will slow the cancellation process. The detection method is only relative to a previous measurement and is dependent that the RFI signal is constant. In practice, the RFI signal amplitude varies with the modulation of the RFI signal. This makes it difficult to achieve fast cancelling.

Instead, coherent detection of the RFI may be obtained by using a coherent quadrature detector, which uses the common mode signal as reference. This will give much more information concerning the RFI signal, making the cancellation much easier.

To cancel the RFI a small part of the common mode RFI has to be adjusted to have the same amplitude but opposite phase as the RFI signal on the differential mode RX part. Here we can use two different ways to achieve the phase and amplitude modification needed. One way is to have a voltage controlled phase shifter and an amplitude controllable amplifier. The other way is to use a quadrature modulator to achieve the necessary amplitude and phase adjustments of the common mode RFI. The hybrid has to be passive until the summing amplifier to avoid RFI overloading.

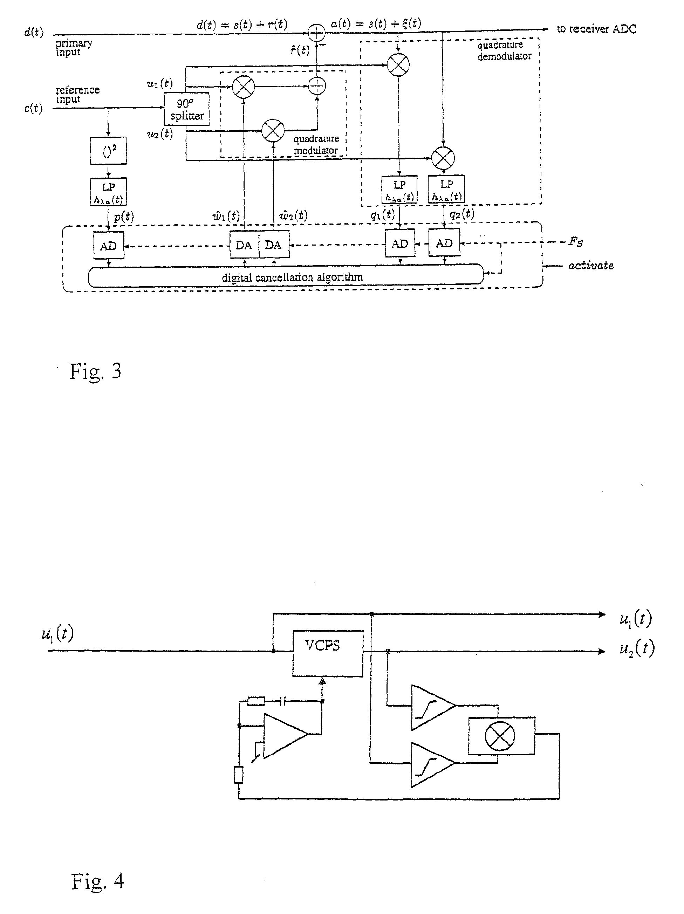

The RFI cancellation is achieved by taking a part of the common mode signal to cancel the differential mode signal. To sense the common mode RFI signal we use a common mode tap, a centre tap off the first parallel inductor This could be part of the POTS-splitter highpass filter, as suggested in Fig. 2, or the hybrid transformer as suggested in Fig. 3. It is essential that the common mode tap is well balanced so that it does not destroy the balance of the line. The common mode tap is independent of the RFI cancellation scheme.

The quadrature method uses a quadrature demodulator to measure the RFI and a quadrature modulator to control or steer the common mode RFI signal in the cancellation. Fig. 3 shows a block diagram of the RFI cancelling apparatus according to an embodiment of the present invention, making use of the quadrature modulator - demodulator arrangement. The RFI canceller uses two RFI reference signals $u_1(t)$ and $u_2(t)$, having the same amplitude and a 90 degree phase difference. To achieve this over a wide frequency range, a self-adjusting loop is implemented in the cancelling apparatus, and an embodiment thereof is schematically illustrated in Fig. 4. This loop comprises a voltage controlled phase shifter VCPS, a phase detector and a loop amplifier. To achieve better dynamics, the loop signals pass through a limiting amplifier. The multiplier circuit of Fig. 4 outputs a DC level of 0 Volts when the phase difference is 90 degrees. If the phase difference is different from 90 degrees, a DC level comes out of the multiplier circuit which is integrated in the loop filter until the phase difference becomes 90 degrees. If the RPI signal disappears for a short time the Multiplier outputs zero volt and the integrator holds the voltage to the VCPS. If the RFI disappears for a long time the integrator will slowly go to an end voltage. Naturally, the time from that the RFI signal appears until the loop is close to 90 degrees has to be short.

Turning back to Fig. 3, showing a block diagram of the RFI cancelling apparatus according to an embodiment of the present invention, the analogue-to-digital (AD) and digital-to-analogue (DA) converters of the controller are shown. The controller is indicated by the bottom dashed line block. These converters are operating at the sampling frequency $F_s$, which is in the range of some, say 20, kHz. Note that the signals at the ADCs are at baseband. As illustrated in Fig. 3, the apparatus has two inputs: a primary input for the differential mode signal $d(t)$ and a reference input for the common mode signal $c(t)$. As previously explained, the common mode signal $c(t)$ may be tapped off the primary input of the apparatus. By applying two DC levels $\hat{w}_1$ and $\hat{w}_2$, to the I and Q inputs of the quadrature modulator, respectively, it is possible to change the phase and amplitude of the common mode RFI signal to all phases and all amplitudes, although the amplitude of course cannot be stronger than the max output level of the modulator. Since the aim of the quadrature modulator is to generate a signal that can cancel the differential mode RFI, i.e. a differential mode cancellation signal, the output of the quadrature modulator

$$\hat{r}(t) = \hat{w}_1 \cdot u_1(t) + \hat{w}_2 \cdot u_2(t)$$

can be viewed as an estimate of the RFI part $r(t)$ of the differential mode signal $d(t)$, which also comprises the desired signal $s(t)$. Every $_T = 1/_{F_s}$ seconds, the cancellation algorithm calculates a new coefficient vector

$$\hat{w}(t) = \begin{bmatrix} \hat{w}_1[n] \\ \hat{w}_2[n] \end{bmatrix},$$

which is converted into the time-continuous weight signals $\hat{w}_1(t)$ and $\hat{w}_2(t)$ by the two digital-to-analogue converters, i.e.

$$\hat{w}(t) = \begin{bmatrix} \hat{w}_1(t) \\ \hat{w}_2(t) \end{bmatrix} = \hat{w}[n], nT \leq t < (n+1)T.$$

The canceller generates the interference-cancelling signal $\hat{r}(t)$ that yields the residual error estimate

$$\xi(t) = r(t) - \hat{r}(t),$$

which depends on $t$ and on the current weights $\hat{w}$. The common mode signal $c(t)$ serves as a reference and is, as previously explained, converted into the Hilbert pair

$$u(t) = \begin{bmatrix} u_1(t) \\ u_2(t) \end{bmatrix},$$

by means of the 90° phase-shift device. The elements of $u(t)$ are weighted by $\hat{w}(t)$ to generate the interference-cancelling signal

$$\hat{r}(t) = \hat{w}(t)^T u(t),$$

where $\hat{w}(t)^T$ denotes the transpose of $\hat{w}(t)$. The interference-cancelling signal is hence realised by the quadrature modulator in Fig. 3, and with the two parameters $\hat{w}_1(t)$ and $\hat{w}_2(t)$, both amplitude and phase of the interference-cancelling signal $\hat{r}(t)$ can be arbitrarily adjusted.

The differential mode input from the hybrid, $d(t)$, i.e. the primary input in Fig. 3, is fed to a summing amplifier. The summing amplifier is used to cancel the differential mode RFI by means of subtracting the estimate, $\hat{r}(t)$, of the RFI from the signal $r(t)$, as described in the previous formula. The summing amplifier also acts as the first amplifier in the modem, and is thus a part of the analogue front-end in a greater perspective than RFI-cancellation. The dynamic range of the amplifier has to be quite high to handle the high crest factor of the VDSL signal. By connecting the RFI cancelling signal to the amplifier after the passive hybrid, the probability of RFI clipping in the amplifier is reduced.

As evidenced by Fig. 3, a quadrature demodulator is used to detect and sense the residual RFI after the summing amplifier. In the illustrated embodiment it comprises two analogue multipliers.The quadrature demodulator is feed with the two RFT reference signals, $u_1(t)$ and $u_2(t)$. The remaining RFI from the differential part, i.e. the output, $\xi(t)$, from the summing amplifier, is feed to the other inputs of the demodulator. The RFI signal on the differential mode is detected as a DC level on the output of the demodulator. The output is filtered by two separate lowpass filters and amplified to a suitable level. The result is the RFI vector, a baseband error signal $q(t)$, which is the lowpass filtered product of the Hilbert pair $u(t)$ and the error estimate $\xi(t)$ caused by the current weight vector, i.e.

$$q(t) = \begin{bmatrix} q_1(t) \\ q2(t) \end{bmatrix} = h_{\lambda a}(t) \cdot (u(t)\xi(t)),$$

where $h_{\lambda a}(t)$ is the lowpass filter impulse response. The output $q(t)$ of the demodulator is an adaptation vector for the weight parameters $w$, sampled with two A/D converters on the controller. Here it is assumed that the product of $u(t)$ and the signal $s(t)$ does not pass through the lowpass filter. Practical experience indicates that this holds.

To detect RFI activity and measure the level of RFI on the common mode, i.e. the common mode disturbance $c(t)$, the invention makes use of an amplitude detector as an RFI power detector. It is constructed as an analogue multiplier with a lowpass filter. The output of the detector, $p(t)$, is proportional to the RFI power level. The sampled signal is subsequently used in the cancellation process to determine RFI activity and to scale the weight vector $w(t)$ in the cancellation process. Hence, a measure of the common mode reference signal power

$$p(t) = h_{\lambda a}(t) \cdot c(t)^2$$

is essential for both the weight-updating and for detecting the presence of an interferer. The signals $q_1(t)$, $q_2(t)$ and $p(t)$ are then sampled at the rate $F_s$ by the three ADCs of the controller illustrated in Fig. 3.

The algorithm mixed-signal realisation of the cancellation is based on the following model of the differential-mode signal:

$$d(t) = w(t)^T u(t) + s(t).$$

The far-end signal as well as any noise present at the receiver input is represented by $s(t)$. We have to find an update estimate $\hat{w}[n]$ for the weight vector, given the estimate at iteration $n$-1, i.e. $\hat{w}[n$-$1]$ as well as information contained in the observable signals $u(t)$ and $d(t)$. Note that this problem is similar to the classical recursive least-squares (RLS) algorithm, as described by S. Haykin in "Adaptive Filter Theory", Prentice Hall, 1996. However, there are two differences. First, the model according to the invention is not based on a transversal filter since the Hilbert pair $u(t)$ does not represent a tap vector. Secondly, the observable signals $u(t)$ and $d(t)$ are time-continuous. Hence, we define the integral cost function

$$\varepsilon[n] = \frac{1}{T} \int_0^{nT} \lambda^{nT-t} |e(t)|^2 dt,$$

where

$$e(t) = r(t) - \hat{w}(t+nT)^T u(t)$$

is the estimation error and the constant $\lambda \le 1$ is forgetting factor weighting recent data higher and older data lower. Minimising $\varepsilon[n]$ yields the update rule for the weight vector

$$\hat{w}[n] = \hat{w}[n$-$1] + \frac{1}{P[n]} q(nT),$$

with

$$P[n] = \lambda P[n - 1] + p(nT).$$

The last two equations constitute the digital part of the update algorithm. The analogue part comprises the weighting in between one period $T$, carried out by the lowpass filters in the demodulator and in the RFI power detector, respectively. By minimising $\varepsilon[n]$ we obtain the optimum lowpass filter impulse response

$$h_{\lambda_a}(t) = \begin{cases} \dfrac{1}{T}\lambda^{t/T}, 0 \le t < T \\ 0, else \end{cases}$$

In one embodiment of the RFI cancelling apparatus, this impulse response is approximated by a first order passive RC lowpass filter. The controller in said embodiment is a PC with a 12-bit AD/DA-card. The algorithm is implemented in software using e.g. Delphi.

The present invention consequently relates to a novel mixed-signal cancellation scheme. It generates an interference-cancelling signal of several MHz, while the adaptive algorithm operates at a rate of some kHz. This is essentially achieved by splitting the RLS algorithm into an analogue and a digital part, where the high-frequency signal processing is analogue. The result is a canceller that is fast enough to protect data transmission over copper twisted pairs from HAM radio interference. Several aspects of the invention have been described, and different embodiments have been illustrated and outlined. The scope of the invention is, however, only limited by the appended claims.

**Claims**

1. Method for cancelling analogue radio frequency interference with a communication signal ($s$) transmitted on a wire pair line, wherein a disturbance signal couples onto the wire pair line as a common mode disturbance ($c$), which common mode disturbance is partially converted into a differential mode disturbance ($r$), and said differential mode disturbance interferes additively with said communication signal, resulting in a differential mode signal ($d$), **characterised in that**:

   - the common mode disturbance is sensed and converted into a reference signal ($u$);
   - a weight parameter ($w$) is applied to the reference signal;
   - a minimised residual signal ($\xi$) is obtained by subtracting the weighted reference signal from the differential mode signal.

2. The method as recited in claim 1, wherein the residual signal is sensed and used to adapt the weight parameter in order to minimise said residual signal.

3. The method as recited in claim 2, wherein said reference signal comprises two reference subsignals ($u_1$, $u_2$) of equal amplitude but with a 90° phase shift.

4. The method as recited in claim 3, **characterised in that**:

   - said weight parameter comprises two weight subparameters ($\hat{w}_1$, $\hat{w}_2$);
   - a first weight subparameter is applied to a first reference subsignal;
   - a second weight subparameter is applied to a second reference subsignal; and
   - the weighted reference subsignals are added to form a differential mode cancellation signal of selectable amplitude and phase.

5. The method as recited in claim 2, wherein said residual signal is applied to said reference subsignals to create an adaptation vector ($q$).

6. The method as recited in claim 5, wherein said weight parameter is updated by means of an adaptive algorithm, dependent on the current weight parameter and said adaptation vector.

7. Apparatus for cancelling analogue radio frequency interference with a communication signal ($s$) transmitted on a wire pair line, wherein a disturbance signal couples onto the wire pair line as a common mode disturbance ($c$), which common mode disturbance is partially converted into a differential mode disturbance ($r$), and said differential mode disturbance interferes additively with said communication signal, resulting in a differential mode signal ($d$), **characterised in** means for sensing the common mode disturbance, means for converting the common mode disturbance into a reference signal ($u$), a modulator for applying a weight parameter ($w$) to the reference signal, means for subtracting a differential mode cancellation signal, comprising the weighted reference signal, from the differential mode signal in order to obtain a minimised residual signal ($\xi$).

8. The apparatus as recited in claim 7, comprising a demodulator devised to sense the residual signal and create an adaptation vector ($q$) for adapting the weight parameter in order to minimise said residual signal.

9. The apparatus as recited in claim 8, further comprising a controller having data memory means and data processing means for running a computer program devised to execute an adaptive algorithm on said weight parameter, dependent on said adaptation vector, for minimising said residual signal, said controller having an output for an adapted weight parameter.

10. The apparatus as recited in claim 8, wherein said means for converting comprises a 90° phase splitter loop, devised to create two reference subsignals ($u_1$, $u_2$) of equal amplitude but with a 90° phase difference.

11. The apparatus as recited in claim 10, wherein said weight parameter comprises two weight subparameters ($\hat{w}_1$, $\hat{w}_2$), and said modulator is a quadrature modulator having an input for said subparameters, an input for said subsignals, means for applying a first weight subparameter to a first reference subsignal and a second weight subparameter to a second reference subsignal, means for adding the weighted reference subsignals to form a differential mode cancellation signal of selectable amplitude and phase, and an output for said cancellation signal.

12. The apparatus as recited in claim 9, wherein said controller is devised to give the differential mode cancellation signal an amplitude equal to the differential mode signal but with opposite phase, said means for subtracting being a summing amplifier devised to sum the differential mode cancellation signal and the differential mode signal.

13. The apparatus as recited in claim 10, wherein said demodulator is a quadrature demodulator having an input for said residual signal, an input for said subsignals, means for applying the residual signal to the first and second reference subsignals, filtering means having an input connected to an output of said means for applying, and a demodulator output connected to said filtering means, for outputting the adaptation vector.

14. The apparatus as recited in claim 9 and 13, wherein said controller has an input connected to said demodulator output.

15. The apparatus as recited in claim 9, further comprising power detecting means for detecting the signal power ($p$) of the common mode disturbance, said power detecting means being coupled to an input of said controller.

16. The apparatus as recited in claim 15, wherein said adaptive algorithm is also dependent on a signal power value from the input from said power detecting means.

17. The apparatus as recited in any of the previous claims 7 - 16, arranged on the receiving end (RX) of a digital subscriber line (DSL) modem, prior to the signal analogue-to-digital converter of the modem.

Fig. 1

Fig. 2

Fig. 3

Fig. 4

**European Patent Office**

## EUROPEAN SEARCH REPORT

Application Number

EP 01 11 0836

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 97 40587 A (AMATI COMMUNICATIONS CORP ;CIOFFI JOHN M (US); BINGHAM JOHN A (US)) 30 October 1997 (1997-10-30) <br> * page 6, line 14 - page 7, line 2 * <br> * page 7, line 28 - page 8, line 4 * <br> * page 8, line 29 - page 9, line 18 * <br> * page 9, line 29 - page 10, line 18 * | 1-17 | H04B1/12 <br> H04L27/26 <br> H04B3/32 |
| X | US 6 052 420 A (YEAP TET HIN ET AL) 18 April 2000 (2000-04-18) <br> * column 2, line 31 - line 56 * <br> * column 6, line 53 - column 7, line 44 * <br> * column 8, line 31 - line 43 * | 1-17 | |
| | | | **TECHNICAL FIELDS SEARCHED (Int.Cl.7)** <br> H04B <br> H04L |

The present search report has been drawn up for all claims

| Place of search | Date of completion of the search | Examiner |
|---|---|---|
| THE HAGUE | 13 September 2001 | De Iulis, M |

EPO FORM 1503 03.82 (P04C01)

EP 1 255 359 A1

## ANNEX TO THE EUROPEAN SEARCH REPORT
## ON EUROPEAN PATENT APPLICATION NO.

EP 01 11 0836

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2001

| Patent document cited in search report | | Publication date | Patent family member(s) | | Publication date |
|---|---|---|---|---|---|
| WO 9740587 | A | 30-10-1997 | AU | 727612 B | 14-12-2000 |
| | | | AU | 2461897 A | 12-11-1997 |
| | | | AU | 727491 B | 14-12-2000 |
| | | | AU | 3054797 A | 12-11-1997 |
| | | | CA | 2251887 A | 30-10-1997 |
| | | | CA | 2251946 A | 30-10-1997 |
| | | | CN | 1229553 A | 22-09-1999 |
| | | | EP | 0894364 A | 03-02-1999 |
| | | | EP | 0894390 A | 03-02-1999 |
| | | | JP | 2000509577 T | 25-07-2000 |
| | | | WO | 9740608 A | 30-10-1997 |
| | | | US | 6014412 A | 11-01-2000 |
| | | | US | 5995567 A | 30-11-1999 |
| US 6052420 | A | 18-04-2000 | CA | 2205686 A | 15-11-1998 |
| | | | WO | 0030273 A | 25-05-2000 |
| | | | AU | 1138599 A | 05-06-2000 |
| | | | CA | 2237460 A | 15-11-1998 |

EPO FORM P0459

For more details about this annex : see Official Journal of the European Patent Office, No. 12/82

13